# EUROPÄISCHE PATENTSCHRIFT

(11) **EP 0 657 238 B1**
(45) Veröffentlichungstag und Bekanntmachung des Hinweises auf die Patenterteilung: **07.01.1998**
(21) Anmeldenummer: 94116884.1
(22) Anmeldetag: 26.10.1994
(51) Int. Cl.: B23B 31/30, B23Q 1/00

(54) **Einrichtung zur Übertragung eines Druckmediums**
Arrangement for the transmission of a pressurized medium
Disposition pour la transmission d'un fluide sous pression

(30) Priorität: 02.12.1993 DE 4341167
(43) Veröffentlichungstag der Anmeldung: 14.06.1995
(73) Patentinhaber: Hiestand, Karl, D-88618 Pfullendorf (DE)
(72) Erfinder: Hiestand, Karl, D-88618 Pfullendorf (DE)
(74) Vertreter: Engelhardt, Guido, Dipl.-Ing.

(56) Entgegenhaltungen:
- EP-A- 0 126 851
- EP-A- 0 339 204
- EP-A- 0 363 328
- DE-A- 3 325 880
- DE-A- 3 537 686

## Beschreibung

Die Erfindung bezieht sich auf eine Einrichtung zur Übertragung eines Druckmediums mit den Merkmalen des Oberbegriffs des Anspruchs 1 (siehe DE-A-35 37 686).

Durch die DE-A1-35 37 686 ist u. a. eine Einrichtung dieser Art zur Zuführung von Druckmedium zu einem hydraulisch betätigbaren Spannzylinder bekannt. Das äußere Bauteil ist hierbei mit geringem Spiel drehbar auf dem inneren Bauteil gelagert, so daß zwischen diesen ein axial gerichteter Dichtspalt gebildet ist, in dessen Bereich die in die beiden Bauteile eingearbeiteten Druckmittelkanäle angeordnet sind. Außerdem sind die beiden Bauteile über Wälzlager unmittelbar aufeinander abgestützt.

Diese konstruktiv einfachen Druckmittelübertragungseinrichtungen haben sich zwar bewährt, da jedoch die Höhe des Dichtspaltes durch die beiden Wälzlager bestimmt ist und der geringe radiale Abstand auch unter unterschiedlichen Betriebsbedingungen eingehalten werden soll, ist es erforderlich, äußerst präzise Wälzlager einzusetzen. Der Kostenaufwand für diese ist demnach erheblich, dennoch ist es mitunter unvermeidbar, daß insbesondere bei hohen Drehzahlen durch ungleiche Temperaturverteilungen Veränderungen des Dichtspaltes in Kauf zu nehmen sind und auch Beschädigungen an den Bauteilen im Bereich des Dichtspaltes auftreten. Und durch eine hohe Lagerreibung, bedingt durch einen sich vergrößernden Dichtspalt und somit einer größeren durch die Wälzlager abströmenden Menge des Druckmediums, können ferner auch erhebliche Leistungsverluste hervorgerufen werden.

Aufgabe der Erfindung ist es demnach, eine Einrichtung zur Übertragung eines Druckmediums der eingangs genannten Gattung zu schaffen, bei der die beiden Bauteile nicht unmittelbar und nicht über Wälzlager aufeinander abgestützt sind und daher keinen axial sich erstreckenden Dichtspalt einschließen, dennoch aber eine stets zufriedenstellende Druckmittelübertragung, und zwar auch bei unterschiedlichen Betriebsbedingungen möglich ist. Durch Wärmebelastungen oder andere äußere Einflüsse bedingte Lageänderungen des inneren und/oder des äußeren Bauteils sollen vielmehr selbsttätig ausgeglichen werden, ohne daß dadurch die Übertragung des Druckmediums oder das Betriebsverhalten der Einrichtung beeinträchtigt wird. Auch Lageungenauigkeiten sollen sich nicht ungünstig auswirken können. Der Bauaufwand, mittels dem dies zu erreichen ist, soll gering gehalten werden, des weiteren sollen keine teueren Maschinenelemente, wie Wälzlager, notwendig sein, um dies zu erreichen, so daß auch eine wirtschaftliche Herstellung und eine vielseitige Verwendbarkeit der Einrichtung gegeben sind.

Gemäß der Erfindung wird dies mit einer Einrichtung zur Überführung eines Druckmediums mit den Merkmalen des Anspruchs 1 erreicht.

Zweckmäßig ist es hierbei, die Zwischenstücke mit radialem Abstand zu dem inneren Bauteil anzuordnen und mit von diesem abstehenden Vorsprüngen die radial gerichteten Dichtspalte zu bilden, wobei das innere Bauteil aus zwei bzw. drei an der Spindel befestigten Teilen bestehen kann, die eine bzw. mehrere Ringnuten einschließen, in die die an dem ortsfesten Bauteil abgestützten Zwischenstücke eingreifen.

Bei einer unmittelbaren Druckmittelzuführung aus dem äußeren Bauteil in die Zwischenstücke ist es ferner angebracht, den axialen Spalt zwischen diesen und dem äußeren Bauteil durch beidseits des in die Zwischenstücke eingearbeiteten Kanals in diese eingesetzte Dichtungsringe abzudichten.

Nach einer andersartigen Ausgestaltung ist es aber auch möglich, die Zwischenstücke jeweils auf einem als Bolzen ausgebildeten und parallel zur Längsachse der Spindel angeordneten Führungsglied verschiebbar zu führen, das an dem ortsfesten Bauteil abgestützt und über das das Druckmittel dem zugeordneten Zwischenstück zuführbar ist.

Der Bolzen sollte hierbei zwischen zwei das äußere Bauteil bildende Teile eingesetzt und mit einem an den Druckmittelkanal des äußeren Bauteils angeschlossenen Kanal zur Zuführung des Druckmediums in das Zwischenstück versehen sein, auch sollte der Bolzen auf einer Stirnseite über eine in diesen eingesetzte Dichtung an dem den Druckmittelkanal aufweisende Teil des äußeren Bauteils anliegen und dessen andere Stirnfläche sollte konvex gekrümmt ausgebildet sein.

Damit sich die Zwischenstücke selbsttätig zwischen den beiden Bauteilen leicht einstellen können, ist es ferner angebracht, diese über eine konvex gekrümmt ausgebildete Außenmantelfläche an dem äußeren Bauteil abzustützen.

Vorteilhaft ist es auch, beiderseits eines oder zweier Zwischenstücke jeweils eine an eine Rücklaufleitung angeschlossene Druckmittelsammelkammer vorzusehen, und die Zwischenstücke mittels in das äußere Bauteil eingesetzter und in in die Zwischenstücke eingearbeitete Bohrungen, Nuten oder dgl. eingreifender Stifte drehfest zu halten.

Das äußere Bauteil kann in einfacher Weise mittels einer Glocke oder einem ähnlichen Zwischenglied an dem Gehäuse, vorzugsweise an dem Spindelstock der Arbeitsmaschine, befestigt sein, auch kann das innere Bauteil unmittelbar an der Spindel der Arbeitsmaschine oder an einem an der Spindel angebrachten Zylinder einer Servoeinrichtung angebaut werden.

Wird eine Einrichtung zur Übertragung eines Druckmediums gemäß der Erfindung ausgebildet, so ist es möglich, das äußere Bauteil unabhängig von dem inneren Bauteil an Maschinenteilen zu befestigen, ein axial gerichteter Dichtspalt zwischen dem äußeren Bauteil und dem inneren Bauteil ist somit nicht vorhanden, auch sind diese nicht über kostenintensive Wälzlager aufeinander abgestützt. Durch Wärmebeanspruchungen und andere äußere Einflüsse bedingte Lageänderungen des äußeren und/oder des inneren Bauteils wie auch u. U. beim Anbau der Einrichtung in Kauf zu nehmende Lageungenauigkeiten können demnach sich nicht mehr ungünstig auf die Höhe des Dichtspaltes auswirken, der radiale Abstand zwischen dem äußeren und dem inneren Bauteil wird vielmehr durch die Zwischenstücke ausgeglichen, die im Bereich der radial gerichteten Dichtspalte in einem der Bauteile geführt sind, sich aber axial, radial oder geneigt zur Achse der Spindel selbsttätig verstellen können. Eine hohe Betriebssicherheit bei geringem Fertigungsaufwand ist somit gewährleistet.

Des weiteren ist von Vorteil, daß die radial gerichteten Dichtspalte zwischen den Zwischenstücken und dem diese tragenden Bauteil nicht in besonderer Weise zu bearbeiten sind, die Zwischenstücke pendeln sich gewissermaßen ein, die Menge des durch diese austretenden Druckmediums ist unabhängig von dem Relativdrehzahlen zwischen den beiden Bauteilen nahezu konstant. Auch sind die Leistungsverluste durch austretendes Druckmedium gering. Und da die beiden Dichtspalte eines Zwischenstückes mehr oder weniger von dem Druckmedium durchströmt werden, sind diese auch ausreichend geschmiert, Betriebsstörungen sind nahezu ausgeschlossen. Bei einfacher und wirtschaftlicher Herstellung ist demnach eine vielseitige Verwendbarkeit, insbesondere als Anbaueinheit am hinteren Ende einer Spindel einer Arbeitsmaschine, gegeben.

In der Zeichnung ist ein Ausführungsbeispiel der gemäß der Erfindung ausgebildeten Einrichtung zur Übertragung eines Druckmediums dargestellt, das nachfolgend im einzelnen erläutert ist. Hierbei zeigt, jeweils im Schnitt:
- Figur 1: eine an einer Werkzeugmaschine angebaute Druckmittelübertragungseinrichtung

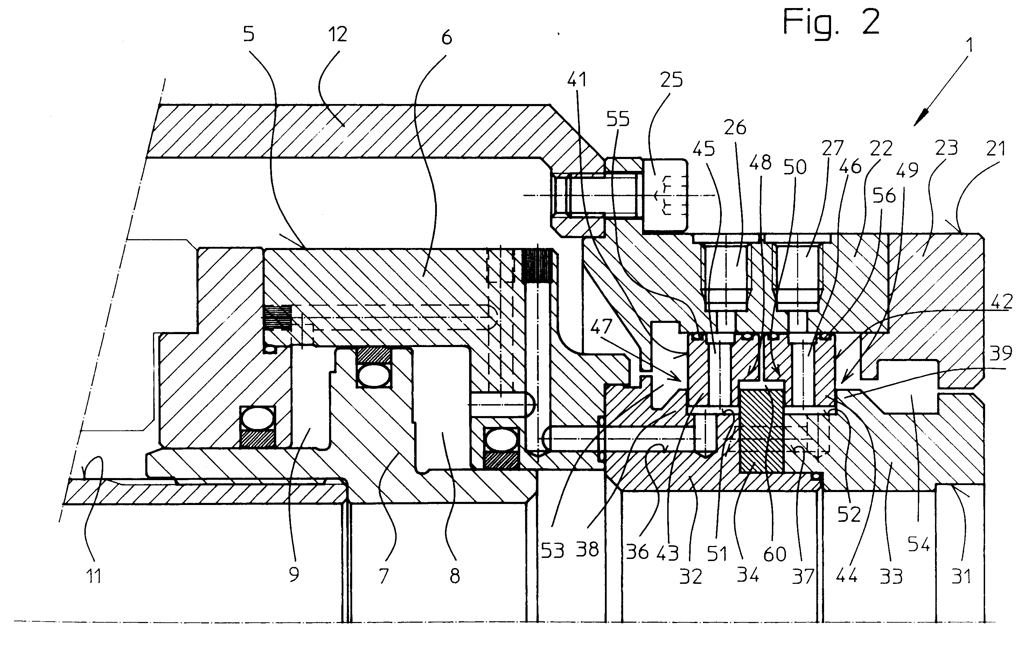

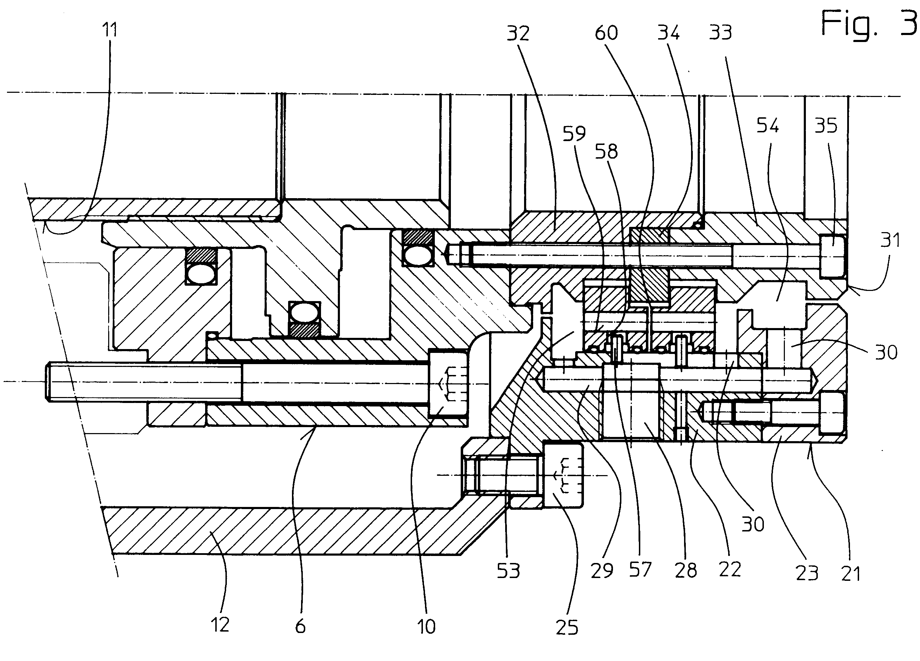

- Figuren 2 und 3: jeweils einen Ausschnitt aus der Einrichtung nach Figur 1, in vergrößerter Wiedergabe,
- Figur 4: die Übertragungseinrichtung nach Figur 1 mit andersartig abgestützten Zwischenstücken und einer in die Spindel integrierten Servoeinrichtung sowie

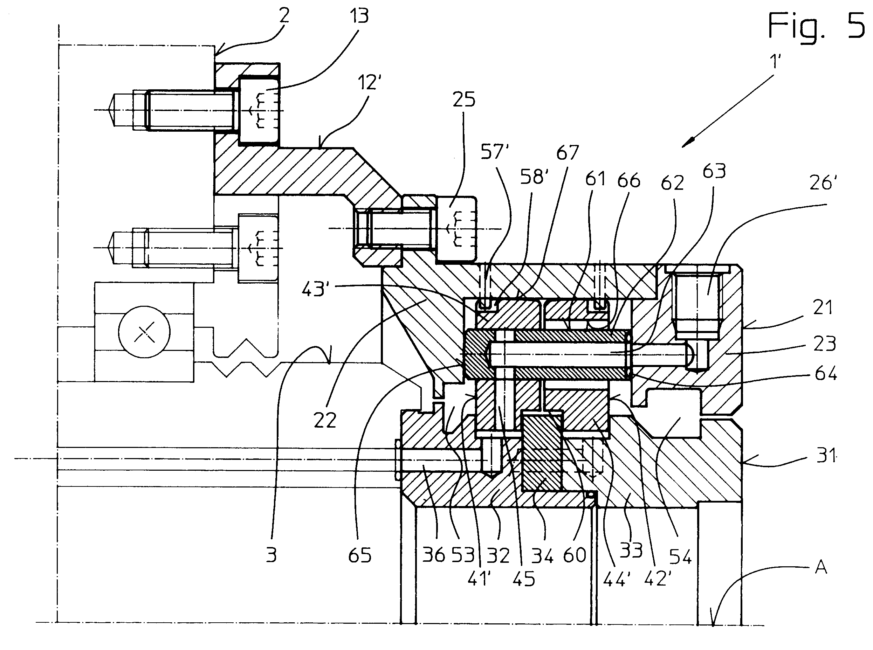

- Figur 5: einen Ausschnitt aus Figur 4, in einer vergrößerten Darstellung.

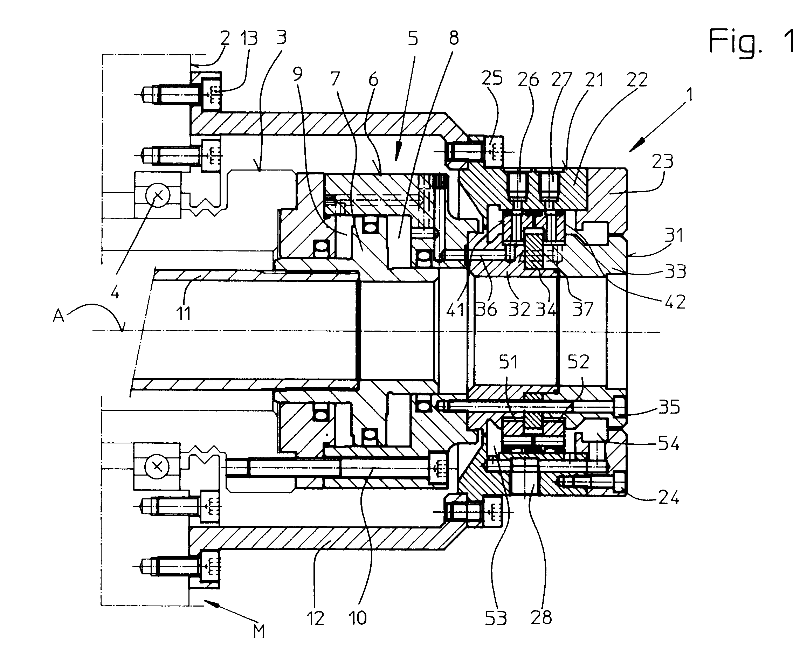

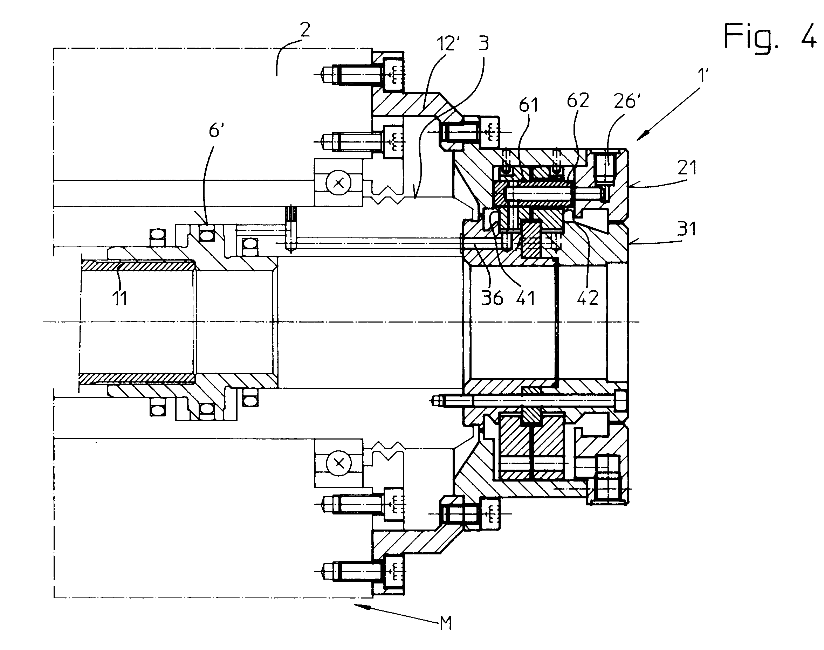

Die in den Figuren 1 und 4 dargestellte und mit 1 bzw. 1' bezeichnete Einrichtung dient zur Übertragung eines Druckmediums aus einem ortsfest abgestützten äußeren Bauteil 21 in ein rotierend antreibbares inneres Bauteil 31, das mit einer Servoeinrichtung 5 fest verbunden ist. Das äußere Bauteil 21, an dem nicht gezeigte Druckmittelzuführungs- und Druckmittelrückführungsleitungen angeschlossen sind, ist hierbei mittels einer Glocke 12 bzw. 12' an einem Gehäuse 2 einer Arbeitsmaschine M mittels Schrauben 13 angebracht, das innere Bauteil 31 läuft dagegen zusammen mit einer Maschinenspindel 3, die mittels Lager 4 in dem Gehäuse 2 drehbar gelagert ist, um.

Als Servoeinrichtung 5 bzw. 5' ist bei dem gezeigten Ausführungsbeispiel jeweils ein beidseitig von einem Druckmedium beaufschlagbarer Verstellkolben 7 vorgesehen, der in einem Zylinder 6 verstellbar angeordnet und mit einer Zugstange 11, mittels der z. B. Spannbacken eines auf die Maschinenspindel 3 aufgesetzten Spannfutters betätigbar sind, trieblich verbunden ist. Bei einer Druckmittelzuführung in in die dem Verstellkolben 7 zugeordneten Druckräume 8 oder 9 wird dieser und damit die Zugstange 11 nach links bzw. rechts verschoben. Bei der Ausgestaltung nach Figur 1 ist die Servoeinrichtung 5 mittels Schrauben 10 an der Maschinenspindel 3 angeschraubt, bei der Ausführungsvariante nach Figur 4 ist die Servoeinrichtung 5' dagegen in die Maschinenspindel 3 integriert.

Das äußere Bauteil 21 ist aus zwei Teilen 22 und 23 zusammengesetzt, die mittels Schrauben 24 miteinander verspannt sind. Und mit Hilfe weiterer Schrauben 25 ist das äußere Bauteil 21 mit der Glocke 12 fest verbunden.

Das innere Bauteil 31 besteht dagegen aus drei Teilen 32, 33 und 34, von denen das mittlere Teil 34 zwischen den beiden äußeren Teilen 32 und 33 eingespannt ist. Mit Hilfe von Schrauben 35 ist das innere Bauteil 31 an dem Zylinder 6 der Servoeinrichtung 5 (Figur 1) bzw. unmittelbar an der Maschinenspindel 3 (Figur 4) befestigt.

In das innere Bauteil 31 sowie das äußere Bauteil 21, die mit radialem Abstand zueinander angeordnet sind, sind einander zugeordnete Druckmittelkanäle 26 und 27 bzw. 36 und 37 eingearbeitet, über die das Druckmedium wahlweise dem Druckraum 8 oder dem Druckraum 9 der Servoeinrichtung 5 zuführbar ist. Außerdem ist das äußere Bauteil 21 mit einer Rücklaufleitung 28 versehen.

Um trotz des radialen Abstandes zwischen dem äußeren Bauteil 21 und dem inneren Bauteil 31 dennoch eine zufriedenstellende Übertragung eines Druckmediums bewerkstelligen zu können, sind zwischen diesen zwei Zwischenstücke 41 und 42 eingesetzt, die als geschlossene Ringe 43 bzw. 44 ausgebildet sind und die Kanäle 45 bzw. 46 aufweisen, die mit den Druckmittelkanälen 26 bzw. 27 des äußeren Bauteils 21 und den Druckmittelkanälen 36 und 37 des inneren Bauteils 31 kommunizieren.

Die Zwischenstücke 41 und 42 sind hierbei in in dem inneren Bauteil 31 vorgesehene Ringnuten 51 bzw. 52 eingesetzt und bilden mit diesem radial gerichtete Dichtspalte 47 und 48 bzw. 49 und 50. Dazu sind an den beiden Teilen 32 und 33 des inneren Bauteils 31 radial abstehende Vorsprünge 38 bzw. 39 vorgesehen, außerdem steht das mittlere Teil 34 des inneren Bauteils 31 in Richtung des äußeren Bauteils 21 über und bildet mit den beiden Zwischenstücken 41 und 42 einen Ringraum 60, in dem, wie auch in neben den Zwischenstücken 41 und 42 vorgesehenen Kammern 53 und 54 das über die radial gerichteten Dichtspalte 47 oder 48 bzw. 49 oder 50 ausströmende Druckmedium aufgefangen wird. Über in dem äußeren Bauteil 21 vorgesehene Zweigleitungen 29 und 30 sowie in die Zwischenstücke 41 und 42 eingearbeitete Entlastungsbohrungen 59 kann das durch die Dichtspalte 47, 48, 49 und 50 abströmende Druckmedium der Rücklaufleitung 28 zugeführt werden.

Die Zwischenstücke 41 und 42 sind drehfest gehalten. Dazu dienen in das äußere Bauteil 21 eingesetzte Stifte 57, die in in die Zwischenstücke 41 und 42 eingearbeitete langlochartige Ausnehmungen 58 eingreifen. Außerdem sind bei dem Ausführungsbeispiel nach Figur 1 in die Außenmantelfläche der Zwischenstücke 41 und 42 im Bereich der Kanäle 45 und 46 Dichtringe 55 und 56 eingesetzt, um einen nahezu verlustlosen Übergang des Druckmediums aus dem äußeren Bauteil 21 in die Zwischenstücke 41 bzw. 42 zu gewährleisten.

Bei einer Druckmittelzufuhr über den Druckmittelzuführungskanal 26 gelangt dieses über den Kanal 45 des Zwischenstückes 41 in den Druckmittelzuführungskanal 36 des inneren Bauteils 31 und von diesem in den Druckraum 8 des Zylinders 6, so daß der Kolben 7 beaufschlagt und nach links verschoben wird. Über die radial gerichteten Dichtspalte 47 und 48 wird dabei mehr oder weniger Druckmedium in die Sammelkammer 53 und den Ringraum 60 abströmen, das Zwischenstück 41 pendelt sich somit gewissermaßen in der Ringnut 51 ein, so daß sich die Breite der Dichtspalte 47 und 48 ständig geringfügig ändert. Auch kann sich das Zwischenstück 41, bedingt z. B. durch eine Lageveränderung des äußeren Bauteils 21, schräg stellen, die Druckmittelübertragung wird dadurch aber nicht beeinträchtigt, das Zwischenstück 41 wird dabei lediglich gegenüber dem äußeren Bauteil 21 geringfügig verstellt.

Bei der Druckmittelübertragungseinrichtung 1' nach Figur 4 sind die zwischen dem äußeren Bauteil 21 und dem inneren Bauteil 31 angeordneten Zwischenstücke 41' und 42' jeweils auf einem Bolzen 62 als Führungsglied 61 angeordnet. Die Bolzen 62 sind hierbei zwischen den beiden Teilen 22 und 23 des äußeren Bauteils 21 gehalten und mit einem Kanal 63 versehen, der mit dem Druckmittelkanal 26' des äußeren Bauteils 21 und dem Kanal 45 des Zwischenstückes 41' kommuniziert.

In die dem Druckmittelkanal 26' zugekehrte Stirnfläche des Bolzens 62 ist eine elastische Dichtung 64 eingesetzt, die gegenüberliegende Stirnseite 65 des Bolzens 62 ist dagegen konvex gekrümmt ausgebildet. Auch die an dem äußeren Bauteil 21 anliegenden Außenmantelflächen 67 der beiden Zwischenstücke 41' und 42' sind konvex gekrümmt gestaltet, so daß die Zwischenstücke 41' und 42', die mittels in das äußere Bauteil 21 eingesetzter und in Ausnehmungen 58' eingreifender Stifte 57' drehfest gehalten sind, pendeln können. Die als Ringe 43' bzw. 44' ausgebildeten Zwischenstücke 41' und 42' sind mit Bohrungen 66 zur Aufnahme des dem anderen Zwischenstück jeweils zugeordneten Führungsgliedes 61 versehen.

Durch äußere Einflüsse bedingte Lageänderungen des äußeren Bauteils 21 und/oder des inneren Bauteils 31 können somit, da die Führungsglieder 61 sich radial nach außen und auch in ihrer Ausrichtung zur Längsachse A der Maschinenspindel 3 verstellen können, selbsttätig auszugleichen.

## Patentansprüche

1. Einrichtung (1) zur Übertragung eines Druckmediums aus einem ortsfest abgestützten äußeren Bauteil (21) in ein rotierend antreibbares inneres Bauteil (31), die ineinander angeordnet und mit einander zugeordneten Druckmittelkanälen (26, 27 bzw. 36, 37) versehen sind, wobei das äußere Bauteil (21) unmittelbar oder über Zwischenglieder (12) an einem Gehäuse (2) einer Arbeitsmaschine (M) und das innere Bauteil (31) mit radialem Abstand zu dem äußeren Bauteil (21) unmittelbar oder über Zwischenglieder (5) an einer in dem Gehäuse (2) drehbar gelagerten Spindel (3) befestigt sind,
**dadurch gekennzeichnet,**
daß zwischen dem äußeren Bauteil (21) und dem inneren Bauteil (31) im Bereich der in diesen vorgesehenen und einander zugeordneten Druckmittelkanälen (26, 27 bwz. 36, 37) zum Ausgleich des radialen Abstandes jeweils ein als geschlossener aus einem metallischen Werkstoff bestehender starrer Ring (43 bzw. 44) ausgebildetes drehfest gehaltenes Zwischenstück (41, 42) eingesetzt ist, das mit mindestens einem Kanal (45 bzw. 46) zur Verbindung eines Druckmittelkanals (26 bzw. 27) des äußeren Bauteils (21) mit einem Druckmittelkanal (36, bzw. 37) des inneren Bauteils (31) versehen ist und an einem der Bauteile (31), vorzugsweise dem inneren Bauteil, über zwei radial gerichtete Dichtungsspalte (47, 48 bwz. 49, 50) seitlich abgestützt und an dem anderen Bauteil (21) axial verstellbar gelagert ist, und daß von den beiden radial gerichteten Dichtspalte (47, 48 bzw. 49, 50) jeweils eine Ringnut (51 bzw. 52) eingeschlossen ist.

2. Einrichtung nach Anspruch 1,
**dadurch gekennzeichnet,**
daß die Zwischenstücke (41, 42) mit radialem Abstand zu dem inneren Bauteil (31) angeordnet sind und mit von diesem abstehenden Vorsprüngen (38, 39, Teil 34) die radial gerichteten Dichtspalte (46, 47 bzw. 48, 49) bilden.

3. Einrichtung nach Anspruch 1 oder 2,
**dadurch gekennzeichnet,**
daß das innere Bauteil (31) aus zwei bzw. drei an der Spindel (3) befestigten Teilen (32, 33, 34) besteht, die eine bzw. mehrere Ringnuten (51, 52) einschließen, in die die an dem ortsfesten Bauteil (21) abgestützten Zwischenstücke (41, 42) eingreifen.

4. Einrichtung nach einem oder mehreren der Ansprüche 1 bis 3,
**dadurch gekennzeichnet,**
daß bei einer unmittelbaren Druckmittelzuführung aus dem äußeren Bauteil (21) in die Zwischenstücke (41, 42) der axiale Spalt zwischen diesen und dem äußeren Bauteil (21) durch beidseits des in die Zwischenstücke (41, 42) eingearbeiteten Kanals (45, 46) in dieses eingesetzte Dichtungsringe (55, 56) abgedichtet ist.

5. Einrichtung nach einem oder mehreren der Ansprüche 1 bis 3,
**dadurch gekennzeichnet,**
daß die Zwischenstücke (41', 42') jeweils auf einem als Bolzen (62) ausgebildeten und parallel zur Längsachse (A) der Spindel (3) angeordneten Führungsglied (61) verschiebbar geführt sind, der an dem ortsfesten Bauteil (21) abgestützt und über den das Druckmittel dem zugeordneten Zwischenstück (41' bzw. 42') zuführbar ist.

6. Einrichtung nach Anspruch 5,
**dadurch gekennzeichnet,**
daß der Bolzen (62) zwischen zwei das äußere Bauteil (21) bildende Teile (22, 23) eingesetzt und mit einem an den Druckmittelkanal (26') des äußeren Bauteils (21) angeschlossenen Kanal (63) zur Zuführung des Druckmediums in das Zwischenstück (41') versehen ist.

7. Einrichtung nach Anspruch 6,
**dadurch gekennzeichnet,**
daß der Bolzen (62) auf einer Stirnseite über eine in diesen eingesetzte Dichtung (64) an dem den Druckmittelkanal (26') aufweisenden Teil (23) des äußeren Bauteils (21) anliegt und daß die andere Stirnfläche (65) des Bolzens (63) konvex gekrümmt ausgebildet ist.

8. Einrichtung nach einem oder mehreren der Ansprüche 1 bis 7,
**dadurch gekennzeichnet,**
daß die Zwischenstücke (41', 42') jeweils über eine konvex gekrümmt ausgebildete Außenmantelfläche (67) an dem äußeren Bauteil (21) verstellbar abgestützt sind.

9. Einrichtung nach einem oder mehreren der Ansprüche 1 bis 8,
**dadurch gekennzeichnet,**
daß beiderseits eines oder zweier Zwischenstücke (41, 42) jeweils eine an eine Rücklaufleitung (28) angeschlossene Druckmittelsammelkammer (53, 54) vorgesehen ist.

10. Einrichtung nach einem oder mehreren der Ansprüche 1 bis 9,
**dadurch gekennzeichnet,**
daß die Zwischenstücke (41, 42 bzw. 41', 42') mittels in das äußere Bauteil (21) eingesetzter und in in die Zwischenstücke (41, 42 bzw. 41', 42') eingearbeiteter Bohrungen (58), Nuten (58') oder dgl. eingreifender Stifte (57, 57') drehfest gehalten ist.

11. Einrichtung nach einem oder mehreren der Ansprüche 1 bis 10,
**dadurch gekennzeichnet,**
daß das äußere Bauteil (21) mittels einer Glocke (13) oder einem ähnlichen Zwischenglied (12') an dem Gehäuse (2), vorzugsweise an dem Spindelstock der Arbeitsmaschine (1), befestigt ist.

12. Einrichtung nach einem oder mehreren der Ansprüche 1 bis 11,
**dadurch gekennzeichnet,**
daß das innere Bauteil (31) unmittelbar an der Spindel (3) der Arbeitsmaschine oder an einem an der Spindel (3) angebrachten Zylinder (6) einer Servoeinrichtung (5) befestigt ist.

## Claims

1. An arrangement (1) for the transmission of a pressurised medium, comprising an external component (21) with a fixed support and located in an internal component (31) which can be driven so as to rotate, with the external and internal components being arranged one inside the other and having ducts (26, 27 or 36, 37) for pressurised medium facing one another, in which the external component (21) is attached directly or via intermediate elements (12) to a housing (2) or an operating machine (M) and the internal component (31) is located at a radial distance from the external component (21) and is attached directly or via intermediate elements (5) to a spindle (3) which is mounted in the housing (2) in such a way that it is able to rotate,
**characterised in that,**
in order to compensate for the radial protrusion, an intermediate piece (41, 42) formed from a closed, rigid ring (43, 44) made from a metallic material and held so it is prevented from rotating is inserted between the external component (21) and the internal component (31) in the area of the ducts (26, 27 or 36, 37) for pressurised medium which are produced facing one another in the internal and external components, with the intermediate piece (41, 42) having at least one duct (45 or 46) for connecting a duct (26 or 27) for pressurised medium of the external component (21) to a duct (36 or 37) for pressurised medium of the internal component (31), and being supported sideways on one of the components (31), preferably the internal component, by means of two radially aligned sealing gaps (47, 48 or 49, 50) and mounted on the other component (21) so it can be moved axially, and that an annular groove (51 or 52) is enclosed by each of the two radially aligned sealing gaps (47, 48 or 49, 50).

2. The arrangement in accordance with claim 1,
**characterised in that,**
the intermediate pieces (41, 42) are arranged at a radial distance from the internal component (31) and form the radially aligned sealing gap (46, 47 or 48, 49) in conjunction with protrusions (38, 39, part 34) from the internal component (31).

3. The arrangement in accordance with claim 1 or 2,
**characterised in that,**
the internal component (31) is composed of two or three parts (32, 33, 34) attached to the spindle (3) which encompass one or more annular grooves (51, 52) into which the intermediate pieces (41, 42) supported on the fixed component (21) engage.

4. The arrangement in accordance with one or more of claims 1 to 3,
**characterised in that,**
when pressurised medium is supplied directly from the external component (21) into the intermediate pieces (41, 42), the axial gap between the intermediate pieces (41, 42) and the external component (21) is sealed by sealing rings (55, 56) inserted into both sides of the duct (45, 46) worked into the intermediate pieces (41, 42).

5. The arrangement in accordance with one or more of claims 1 to 3,
**characterised in that,**
the intermediate pieces (41', 42') are each movably guided on a guidance element (61) formed as a pin (62) and arranged in parallel to the longitudinal axis (A) of the spindle (3), with the guidance element (61) being supported on the fixed component (21) and providing a means by which the pressurised medium can be supplied to the corresponding intermediate piece (41' or 42').

6. The arrangement in accordance with claim 5,
**characterised in that,**
the pin (62) is inserted between two parts (22, 23) which form the external component (21) and has a duct (63) which is connected to the duct (26') for pressurised medium of the external component (21) and serves to supply the pressurised medium into the intermediate piece (41').

7. The arrangement in accordance with claim 6,
**characterised in that,**
one end of the pin (62) is in contact with the part (23) of the external component (21) which has the duct (26') for pressurised medium, with this contact being effected via a seal (64) inserted in the pin (62), and that the other end (65) of the pin (63) has a curved, convex shape.

8. The arrangement in accordance with one or more of claims 1 to 7,
**characterised in that,**
each of the intermediate pieces (41', 42') is supported against the external component (21) by means of a convex, curved external jacket surface (67).

9. The arrangement in accordance with one or more of claims 1 to 8,
**characterised in that,**
a collecting chamber (53, 54) for pressurised medium connected to a return line (28) is provided on both sides of one or two intermediate pieces (41, 42).

10. The arrangement in accordance with one or more of claims 1 to 9,
**characterised in that,**
the intermediate pieces (41, 42 or 41', 42') are prevented from rotating by pins (57, 57') which are inserted in the external component (21) and engage in bores (58), grooves (58') or similar worked into the intermediate pieces (41, 42 or 41', 42').

11. The arrangement in accordance with one or more of claims 1 to 10,
**characterised in that,**
the external component (21) is attached to the housing (2), preferably to the spindle stock of the working machine (1), by means of a bell (13) or a similar intermediate element (12').

12. The arrangement in accordance with one or more of claims 1 to 11,
**characterised in that,**
the internal component (31) is directly fixed to the spindle (3) of the working machine or to a cylinder (6) of a servo device (5) which is attached to the spindle (3).

## Revendications

1. Dispositif (1) pour la transmission d'un liquide sous pression à partir d'un composant extérieur (21) appuyé rigidement à un point, vers un composant intérieur (31) entraîné en rotation, disposés l'un dans l'autre et équipés de canaux de liquide sous pression (26, 27 ou 36, 37) attribués respectivement, le composant extérieur (21) étant fixé directement ou par des éléments intermédiaires (12) sur un carter (2) d'une machine de travail (M), et le composant intérieur (31) étant fixé à une certaine distance radiale par rapport au composant extérieur (21) directement ou par des éléments intermédiaires (5) sur une broche (3) entraînée en rotation dans le carter (2),
caractérisé en ce que
pour compenser l'écartement radial, entre le composant extérieur (21) et le composant intérieur (31), dans la section des canaux de liquide sous pression (26, 27 ou 36, 37) prévus et attribués respectivement, il est prévu respectivement un élément intermédiaire stationnaire (41, 42) conçu sous la forme d'un anneau rigide (43 ou 44) fermé et consistant d'un matériau métallique, muni d'au moins un canal (45 ou 46) qui assure la liaison entre un canal à liquide sous pression (26 ou 27) du composant extérieur (21) avec un canal à liquide sous pression (36 ou 37) du composant intérieur (31), qu'il s'appuie latéralement sur un des composants (21 ou 31), de préférence le composant intérieur (31), par l'intermédiaire de deux fentes d'étoupage radiales (47, 48 ou 49, 50), qu'il soit logé de façon axialement réglable sur l'autre composant (21), et que les deux fentes d'étoupage radiales (47, 48 ou 49, 50) renferment respectivement une lente annulaire (51 ou 52).

2. Dispositif d'après la revendication 1,
caractérisé en ce que
les éléments intermédiaires (41, 42) sont disposés à une certaine distance radiale par rapport au composant intérieur (31) et qu'avec les embouts (38, 39 pièce 34) formés sur celui-ci, ils constituent les fentes d'étoupage radiales (46, 47 ou 48, 49).

3. Dispositif d'après la revendication 1 ou 2,
caractérisé en ce que
le composant intérieur (31) consiste de deux ou trois pièces (32, 33, 34) fixées sur la broche (3) qui renferment une ou plusieurs fentes annulaires (51, 52) dans lesquelles s'engrènent les éléments intermédiaires (41, 42) s'appuyant sur le composant stationnaire (21).

4. Dispositif d'après une ou plusieurs des revendications 1 à 3,
caractérisé en ce que,
en cas d'alimentation directe du liquide sous pression à partir du composant extérieur (21) vers les éléments intermédiaires (41, 42), la lente axiale entre ceux-ci et le composant extérieur (21) est obturée par des anneaux d'étoupage (55, 56) qui y sont insérés de part et d'autre du canal (45, 46) pratiqué dans les éléments intermédiaires (41, 42).

5. Dispositif d'après une ou plusieurs des revendications 1 à 3,
caractérisé en ce que
les éléments intermédiaires (41', 42') sont disposés respectivement de manière réglable sur un organe de guidage (61) conçu sous la forme d'un boulon (62) et disposé parallèlement à l'axe longitudinale (A) de la broche (3), qui s'appuie sur le composant stationnaire (21) et par lequel le liquide sous pression se laisse refouler vers l'élément intermédiaire (41' ou 42') correspondant.

6. Dispositif d'après la revendication 5,
caractérisé en ce que
le boulon (62) est monté entre deux pièces (22, 23) formant le composant extérieur (21), et qu'il est muni d'un canal (63) branché sur le canal de liquide sous pression (26') du composant extérieur (21) pour le refoulement du liquide sous pression vers l'élément intermédiaire (41').

7. Dispositif d'après la revendication 6,
caractérisé en ce que,
au moyen d'un joint (64) inséré dans une face frontale du boulon (62), celui-ci porte sur la partie (23) du composant extérieur (21) comportant le canal à liquide sous pression (26') et que l'autre face frontale (65) du boulon (63) a une forme convexe.

8. Dispositif d'après une ou plusieurs des revendications 1 à 7,
caractérisé en ce que,
au moyen d'une enveloppe extérieure convexe (67), les éléments intermédiaires (41', 42') s'appuient respectivement et de manière réglable sur le composant extérieur (21).

9. Dispositif d'après une ou plusieurs des revendications 1 à 8,
caractérisé en ce que
de part et d'autre d'un ou de deux éléments intermédiaires (41, 42), il est prévu respectivement une chambre collectrice de liquide sous pression (53, 54) raccordée à une conduite de retour (28).

10. Dispositif d'après une ou plusieurs des revendications 1 à 9,
caractérisé en ce que
les éléments intermédiaires (41, 42 ou 41', 42') sont positionnés par des goupilles (57, 57') insérés dans le composant extérieur (21) et s'engrenant dans les perçages (58), gorges (58') etc. pratiqués dans les éléments intermédiaires (41, 42 ou 41', 42').

11. Dispositif d'après une ou plusieurs des revendications 1 à 10,
caractérisé en ce que
le composant extérieur (21) est fixé au moyen d'une cloche (13) ou d'un organe intermédiaire similaire (12') sur le carter (2), de préférence sur la poupée de la machine de travail (1).

12. Dispositif d'après une ou plusieurs des revendications 1 à 11,
caractérisé en ce que
le composant intérieur (31) est fixé directement sur la poupée (3) de la machine de travail ou sur un vérin (6) d'une servocommande (5) fixé sur la broche (3).
